# EUROPEAN PATENT SPECIFICATION

(11) **EP 4 457 139 B1**
(45) Date of publication and mention of the grant of the patent: **10.06.2026**
(21) Application number: 22917010.5
(22) Date of filing: 09.11.2022
(51) Int. Cl.: B64D 1/02, B64D 7/06, F41H 11/02, F42B 5/15, F42B 12/70, F41F 3/00

(54) **A SHIELDING CASE FOR A ROTARY FLARE DISPENSING SYSTEM**
HITZESCHILDGEHÄUSE FÜR EINEN ROTIERENDEN TÄUSCHKÖRPERWERFER
BOÎTIER DE PROTECTION POUR UN SYSTÈME ROTATIF DE DISTRIBUTION DE LEURRES LUMINEUX

(30) Priority: 27.12.2021 TR 202121202
(43) Date of publication of application: 06.11.2024
(73) Proprietor: Tusas- Turk Havacilik Ve Uzay Sanayii Anonim Sirketi, 06980 Ankara (TR)
(72) Inventor: TURK, Fatih, 06980 Kahramankazan/Ankara (TR); SAGLAR, Emrullah, 06980 Kahramankazan/Ankara (TR)
(74) Representative: Berkkam, Ayfer
(86) International application number: PCT/TR2022/051265
(87) International publication number: WO 2023/129007

(56) References cited:
- WO-A1-2013/130518
- WO-A1-2013/130518
- WO-A1-2020/246931
- WO-A1-2020/246931
- WO-A1-2021/040653
- WO-A1-2021/040653
- TR-U- 200 708 404
- TR-U- 200 708 404

## Description

The present invention relates to flare systems protected by a heat shield system, located at an exhaust outlet of helicopters from hot exhaust gases.

In helicopters, gases with temperatures as high as 300°C exhausted from the exhaust during a flight reach a CMDS (Counter Measure Dispenser System) equipment, causing the equipment to exceed an operating temperature of 70°C and causing the equipment to not operate and be damaged. To solve this problem, a shield is needed to protect the equipment from the heat thereon. The heat shield design is made of a titanium material, which is one of the metal materials with the lowest heat permeability on the outer surface. In addition, an insulation material resistant to combustion and high temperature should be chosen and coated on an inner surface of the titanium heat shield.

The United States patent document US9932900B2, which is included in the known-state of the art, comprises a structure aiming to protect devices in an engine compartment of an air vehicle against high temperatures. The document discloses that geometry of the insulation cage structure is determined according to the geometry of the equipment to be thermally isolated.

The United States patent document US9134098B1, which is included in the known-state of the art, relates to a cartridge launcher system used against rockets threatening an air vehicle. The invention discloses that cartridge launcher systems are positioned inside a protector, which is a launcher unit created to be armored and covered, in order to protect the air vehicle against attacks and bullets. It is disclosed that the covers on the protector aim to protect the cartridge launchers from external influences. It is disclosed that the protective equipment provided to protect launchers can be made of titanium, ceramic composite materials or any material with armor properties.

The United States patent application US20100326262, which is included in the known-state of the art, discloses a casing box which uses radar diversion reflectors with cartridge launcher systems. The invention discloses that the boxes serve as a protective plate and the direction of the shot can be changed by a pilot using a control mechanism located in the middle of the casing boxes.

The Turkish utility model application TR200708404, which is included in the known-state of the art, is related to the helicopter self-protection chaff/flare ammunition firing direction separation according to the pre-mission system mission area threat plan when a radar or heat-seeking missile is detected by the radar or missile warning systems. It describes the issues related to the directed chaff/flare firing system, which provides effective and flight efficient launch opportunities by using a single shot system of different ammunition such as chaff/flare with different guidance matrices in elevation and azimuth.

The PCT application WO2021040653, which is included in the known-state of the art, relates to a rotary distribution mechanism that allows ammunition to be launched from different angles, used as a countermeasure against guided missiles. Here, a rotary distribution mechanism is provided that will provide a lighter rotary distributor than existing systems thanks to the rotary distribution mechanism. It is explained that the performance and efficiency of the platform on which the mechanism is used is increased with the invention.

The PCT application WO2013130518, which is included in the known-state of the art, relates to methods and apparatus for active protection against a threat, and more particularly, active protection systems for use with mobile platforms. The disclosure includes apparatus and methods for providing protection against an airborne threat on mobile platforms, such as helicopters. The disclosure includes methods and apparatus that are sufficiently portable and lightweight to be transported on airborne platforms, which may have significant weight and size limitations.

The PCT application WO2020246931, which is included in the known-state of the art, relates to a dispenser for storing and launching countermeasures such as cartridges and chaff, wherein the countermeasures are stored in a dispenser that can direct the countermeasure in different directions. The object is to provide a dispenser that has an aerodynamic shape in the rest position. A dispenser is provided in which the magazine containing the countermeasures can be directed at a selected angle in a desired direction in which the countermeasure is to be launched.

Thanks to a heat shield system, cartridge launcher systems according to the present invention are enabled to be protected from heat and operate effectively.

An object of the present invention is to protect CMDS (Counter Measure Dispenser System) equipment used in helicopters from high temperatures.

Another object of the present invention is to enable effective operation of the CMDS (Counter Measure Dispenser System) equipment in helicopters.

The rotary flare dispensing system realized to achieve the object of the invention, which is defined in the first claim and other claims dependent thereon, configured to be installed on a body of an air vehicle such as a helicopter; the air vehicle comprising at least one gas discharge element which discharges hot waste gases from the body; the rotary flare dispensing system comprises at least one cartridge providing defense by eliminating heat-guided threats to the body; a launcher unit configured to be located on the body extending outward from the body, so as to be in front of an area where the gas discharge element discharges hot air, wherein the launcher unit is suitable for launching cartridges against thermal threats directed to the body; at least one rotation mechanism configured to be located on the body, which enables the launcher unit to orient itself against incoming threats on the body; a casing connected to the rotation mechanism, surrounding the launcher unit, acting as a shield for the launcher unit, transferring a rotational movement of the rotation mechanism to the launcher unit and protecting the launcher unit from environmental factors.

The casing of the rotary flare dispensing system according to the invention comprises at least one protrusion extending, on a face of the launcher unit that launches cartridges, from the casing by making an angle with an axis on which the cartridges are positioned throughout the launcher unit, thus protecting the launcher unit from hot air by striking the hot air coming from the gas discharge element to the protrusion and directing it outwards from the launcher unit.

In an embodiment of the invention, the rotary flare dispensing system comprises the casing which is shape compatible with the launcher unit and is connected to the rotation mechanism to move together with the launcher unit, wherein the launcher unit is placed in the casing such that the cartridge-launching part of the launcher is exposed.

In an embodiment of the invention, the heat shield system comprises the casing which consists of a first cover located between the rotation mechanism and the launcher unit, with one end connected to the rotation mechanism and the other end to the launcher unit, and a second cover extending from the first cover to surround the launcher unit, thereby enabling ease of assembly for the casing.

In an embodiment of the invention, the rotary flare dispensing system comprises the curved protrusion which expands outward over the casing in a direction that the cartridges extend longitudinally towards the launcher unit, thus taking the form of a skirt and providing low drag with the sides of the casing.

In an embodiment of the invention, the rotary flare dispensing system comprises at least one fastener that removably connects the first cover and the second cover.

In an embodiment of the invention, the rotary flare dispensing system comprises at least one insulating element made of a heat insulating material, located in an inner part of the casing and at a part of the launcher unit inside the casing, thus protecting the launcher unit from heat caused by hot air coming from the gas discharge element.

In an embodiment of the invention, the rotary flare dispensing system comprises the insulating element that substantially encloses and fills a portion between the launcher unit and the casing where the casing contacts the launcher unit.

In an embodiment of the invention, the rotary flare dispensing system comprises the insulating element made of a material such as polyurethane foam, glass wool, cork or aerogel.

In an embodiment of the invention, the rotary flare dispensing system comprises the casing made of a titanium material resistant to high temperatures.

The rotary flare dispensing system realized to achieve the object of the present invention is illustrated in the attached drawings, in which:
Figure 1 is a perspective view of a rotary flare dispensing system positioned on an air vehicle body.
Figure 2 is a perspective view of a casing.
Figure 3 is a perspective view of a rotary flare dispensing system positioned on an air vehicle body.

All the parts illustrated in figures are individually assigned a reference numeral and the corresponding terms of these numbers are listed below:
1. Rotary Flare Dispensing System
2. Body
3. Launcher Unit
4. Rotation Mechanism
   401. Ball Bearing
   402. Hinge
5. Casing
   501. First Cover
   502. Second Cover
6. Protrusion
7. Fastener
8. Insulating Element
9. Support element
10. Holder
11. Sensor
12. Control Unit
   E. Gas Discharge Element
   F. Cartridge

A rotary flare dispensing system (1), configured to be installed on a body (2) of an air vehicle; the air vehicle comprising at least one gas discharge element (E) on the body (2), which enables the discharge of hot waste gases; the rotary flare dispensing system (1) comprises a launcher unit (3) configured to be located on the body (2) to extend outward from the body (2) and suitable for launching a cartridge (F) against thermal threats directed to the body (2), wherein the launcher unit (3) is located on a side of the gas discharge element (E) that discharges hot air; at least one cartridge (F) launched from the launcher unit (3) against thermally guided threats directed to the body (2), so that the cartridge (F) is used for defense purposes; at least one rotation mechanism (4) which is configured to be located on the body (2) in a rotatable manner, thus enabling the launcher unit (3) to which it is attached to orient itself towards a thermal target; a casing (5) located to substantially surround the launcher unit (3), serving as a housing for the launcher unit (3), connected to the rotation mechanism (4), and transferring movements of the rotation mechanism (4) to the launcher unit (3) and protecting the launcher unit (3) from external factors.

The casing (5) of the rotary flare dispensing system (1) according to the invention comprises at least one protrusion (6) extending from the casing (5) outwardly from an opening through which the launcher unit (3) fires the cartridge (F), and is at an angle to the direction in which the cartridges (F) are positioned along the launcher unit (3), thereby protecting the launcher unit (3) from hot air since the air coming from the gas discharge element (E) is hit against the protrusion (6) and is directed outwards from the launcher unit (3).

A gas discharge element (E) is provided on the body (2) located on the air vehicle, through which the hot waste gases formed during the flight are discharged. At least one cartridge (F), which destroys heat-guided threats towards the body (2), is launched by a launcher unit (3) to eliminate these threats, wherein the launcher unit (3) is located to extend outward from the body (2), in front of an area where the gas discharge element (E) discharges gas. At least one rotation mechanism (4), which is rotatably located on the body (2) and is connected to the launcher unit (3), directs the launcher unit (3) towards the thermal target. In this way, the launcher unit (3) effectively destroys threats. A casing (5) located on the body (2) and connected to the rotation mechanism (4) substantially surrounds the launcher unit (3) to protect the launcher unit (3) from external factors. The casing (5) transfers the rotational movement of the rotation mechanism (4) to the launcher unit (3).

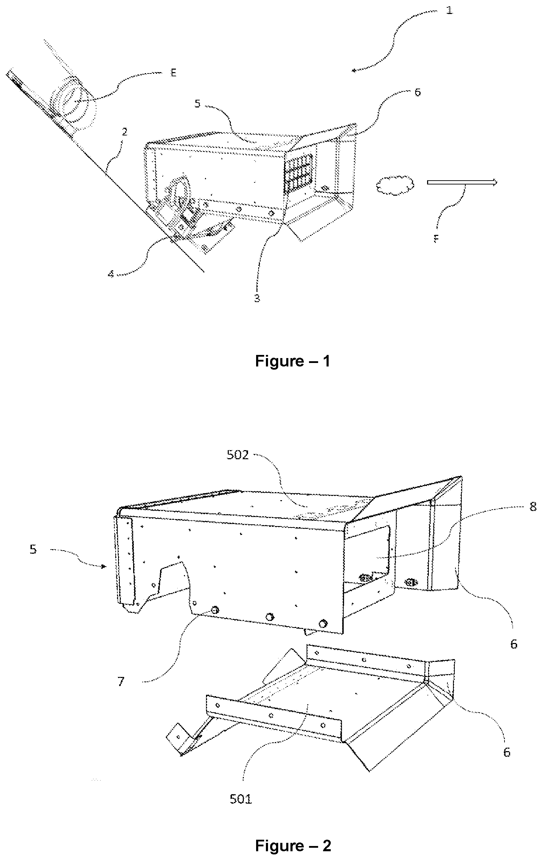

The rotary flare dispensing system (1) comprises at least one protrusion (6) extending outward from the casing (5) outwardly from an opening through which the launcher unit (3) fires the cartridge (F), and at an angle to the direction along which the cartridges (F) are positioned longitudinally in the launcher unit (3), thereby protecting the launcher unit (3) from hot air since the air coming from the gas discharge element (E) is hit against the protrusion (6) and is directed outwards from the launcher unit (3) (Figure 1).

In an embodiment of the invention, a rotary flare dispensing system (1) comprises the casing (5) which is substantially form-fitted with the launcher unit (3) and connected to the rotation mechanism (4) to move together with the launcher unit (3), wherein the launcher unit (3) is placed inside the casing (5) such that the opening of the launcher unit (3) through which it launches cartridge (F) is exposed. The casing (5) has a shape form-fitting with the launcher unit (3). The casing (5) covers the launcher unit (3) such that the surface thereof launching the cartridge (F) is exposed. The casing (5) is connected to the launcher unit (3) so as to transfer rotational movements of the rotation mechanism (4).

In an embodiment of the invention, a rotary flare dispensing system (1) comprises the casing (5) which consists of a first cover (501) located between the rotation mechanism (4) and the launcher unit (3), with one end connected to the rotation mechanism (4) and one end to the launcher unit (3), and a second cover (502) extending outwardly from the first cover (501) so as to substantially surround the launcher unit (3), thereby enabling ease of assembly for the casing (5). The casing (5) consists of a first cover (501) and a second cover (502). The first cover (501) is located between the launcher unit (3) and the rotation mechanism (4). The second cover (502) surrounds the launcher unit (3) and extends outward from the first cover (501). In this way, ease of assembly and service is provided for the casing (5) (Figure 2).

In an embodiment of the invention, a rotary flare dispensing system (1) comprises the protrusion (6) extending outward in the form of a skirt such that it expands from the direction where the cartridges (F) are positioned along the launcher unit (3) in the casing (5), and having a curved transition to form an effective aerodynamic structure with the sides of the casing (5). The protrusion (6) extending outward from the casing (5) forms an angle with the extension where the cartridges (F) are placed throughout the launcher unit (3), and extends in the form of a skirt, forming a curved structure. In addition, the protrusion (6) creates an effective aerodynamic structure. Therefore, hot gases from the gas discharge element (E) are prevented from affecting the launcher unit (3), thus ensuring the effective operation of the launcher unit (3).

In an embodiment of the invention, a rotary flare dispensing system (1) comprises at least one fastener (7) that enables the first cover (501) and the second cover (502) to be mounted removably to each other. It comprises a fastener (7) which assembles the first cover (501) and the second cover (502) to each other. In this way, ease of assembly is provided for the casing (5).

In an embodiment of the invention, a rotary flare dispensing system (1) comprises at least one insulating element (8) located substantially within an inner wall of the casing (5) and a part of the launcher unit (3) that is provided in the casing (5), wherein the insulating element (8) is made of a heat insulating material, thus protecting the launcher unit (3) from heat caused by hot air coming from the gas discharge element (E). Inside the casing (5), there is at least one insulating element (8) made of a heat insulating material and surrounding the launcher unit (3). Therefore, the launcher unit (3) is protected from hot gases coming from the gas discharge element (E).

In an embodiment of the invention, a heat shield system (1) comprises the insulating element (8) that substantially covers an area between the launcher unit (3) and the casing (5).

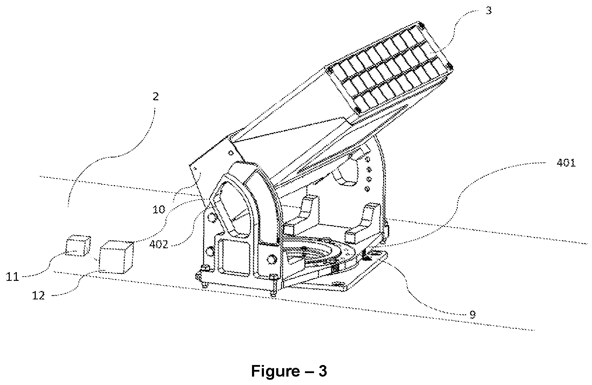

A rotary flare dispensing system (1) may include the rotation mechanism (4) which consists of at least one ball bearing (401) which enables the launcher unit (3) to be rotated around its own center on the body (2); at least one support element (9) located on the ball bearing (401), extending outward from the ball bearing (401), and connecting the launcher unit (3) to the body (2); a holder (10) located on the support element (9) to extend outward from the body (2), and connecting the support element (9) and the launcher unit (3) to each other; at least one hinge (402) which connects the holder (10) to the support element (9) such that the holder (10) is rotatable around the support element (9), and which enables the launcher unit (3) to be positioned. Therefore, the launcher unit (3) can be activated (Figure 3).

In an embodiment of the invention, a rotary flare dispensing system (1) comprises the insulating element (8) made of materials such as polyurethane foam, glass wool, cork or aerogel.

In an embodiment of the invention, a rotary flare dispensing system (1) comprises the casing (5) made of a titanium material resistant to high temperatures.

In a further, non-claimed example, a rotary flare dispensing system (1) may include a sensor (11) on the body (2) that detects motion; a control unit (12) which triggers the sensor (11); the rotation mechanism (4) triggered by the sensor (11) to move; the launcher unit (3) triggered by the sensor (11) to fire cartridges (F). The sensor (11) on the body (2) detects the movement and is triggered by the control unit (12). The sensor (11) triggers the rotation mechanism (4) to activate the launcher unit (3).

## Claims

1. A rotary flare dispensing system (1), configured to be installed on a body (2) of an air vehicle; the air vehicle comprising at least one gas discharge element (E) on the body (2), which enables the discharge of hot waste gases;
the rotary flare dispensing system (1) comprising
a launcher unit (3) configured to be located on the body (2) to extend outward from the body (2) and suitable for launching a cartridge (F) against thermally guided threats directed to the body (2),
at least one cartridge (F) launched from the launcher unit (3) against thermally guided threats directed to the body (2), so that the cartridge (F) is used for defense purposes;
at least one rotation mechanism (4) which is configured to be located on the body (2) in a rotatable manner, thus enabling the launcher unit (3) to which it is attached to orient itself towards a thermally guided threat target;
a casing (5) located to substantially surround the launcher unit (3), serving as a casing for the launcher unit (3), connected to the rotation mechanism (4), and transferring movements of the rotation mechanism (4) to the launcher unit (3) and protecting the launcher unit (3) from external factors,
the casing (5) comprising at least one protrusion (6) extending from the casing (5) outwardly from an opening through which the launcher unit (3) fires the cartridge (F), **characterized in that**
the launcher unit (3) is configured to be located on a side of the gas discharge element (E) that discharges hot air, and
the protrusion being at an angle to the direction in which the cartridges (F) are positioned along the launcher unit (3), thereby protecting the launcher unit (3) from hot air when the air coming from the gas discharge element (E) hits against the protrusion (6) and is directed outwards from the launcher unit (3).

2. A rotary flare dispensing system (1) according to claim 1, **characterized by** the casing (5) being substantially form-fitted with the launcher unit (3) and connected to the rotation mechanism (4) to move together with the launcher unit (3), wherein the launcher unit (3) is placed inside the casing (5) such that the opening of the launcher unit (3) through which it launches cartridge (F) is exposed.

3. A rotary flare dispensing system (1) according to claim 1 or claim 2, **characterized by** the casing (5) consisting of a first cover (501) located between the rotation mechanism (4) and the launcher unit (3), with one end connected to the rotation mechanism (4) and one end to the launcher unit (3), and a second cover (502) extending outwardly from the first cover (501) so as to substantially surround the launcher unit (3), thereby enabling ease of assembly for the casing (5).

4. A rotary flare dispensing system (1) according to any of the above claims, **characterized by** the protrusion (6) extending outward in the form of a skirt such that it expands from the direction where the cartridges (F) are positioned along the launcher unit (3) in the casing (5), and having a curved transition to form an effective aerodynamic structure with the sides of the casing (5).

5. A rotary flare dispensing system (1) according to claim 3, **characterized by** at least one fastener (7) that enables the first cover (501) and the second cover (502) to be mounted removably to each other.

6. A rotary flare dispensing system (1) according to any of the above claims, **characterized by** at least one insulating element (8) located substantially within an inner wall of the casing (5) and a part of the launcher unit (3) that is provided in the casing (5), wherein the insulating element (8) is made of a heat insulating material, thus protecting the launcher unit (3) from heat caused by hot air coming from the gas discharge element (E).

7. A rotary flare dispensing system (1) according to claim 6, **characterized by** the insulating element (8) substantially covering an area between the launcher unit (3) and the casing (5).

8. A rotary flare dispensing system (1) according to claim 6, **characterized by** the insulating element (8) being made of materials such as polyurethane foam, glass wool cork or aerogel.

9. A rotary flare dispensing system (1) according to any of the above claims, **characterized by** the casing (5) being made of a titanium material resistant to high temperatures.

## Patentansprüche

1. Ein rotierendes Täuschkörper-Abwurfsystem (1), das zur Installation an einem Rumpf (2) eines Luftfahrzeugs konfiguriert ist; wobei das Luftfahrzeug mindestens ein Gasauslasselement (E) am Rumpf (2) aufweist, das die Abgabe heißer Abgase ermöglicht, wobei das rotierende Täuschkörper-Abwurfsystem umfasst: ein Abschussgerät (3), das so konfiguriert ist, dass es sich am Rumpf (2) befindet, von diesem nach außen erstreckt und zum Abschuss eines Täuschkörpers (F) gegen thermisch gelenkte Bedrohungen geeignet ist, die auf den Rumpf (2) gerichtet sind, wobei mindestens ein Täuschkörper (F) von dem Abschussgerät (3) gegen thermisch gelenkte Bedrohungen, die auf den Rumpf (2) gerichtet sind, abgefeuert wird, sodass die Täuschkörper (F) zu Verteidigungszwecken verwendet wird; mindestens ein Drehmechanismus (4), der so konfiguriert ist, dass er drehbar am Rumpf (2) angeordnet ist und es dem Abschussgerät (3), an dem er befestigt ist, ermöglicht, sich auf ein thermisch gelenktes Bedrohungsziel auszurichten; ein Gehäuse (5), das das Abschussgerät (3) im Wesentlichen umschließt und als Gehäuse dient, ist mit dem Drehmechanismus (4) verbunden und überträgt dessen Bewegungen auf das Abschussgerät (3); und es schützt das Abschussgerät (3) vor äußeren Einflüssen, das Gehäuse (5) weist mindestens einen Vorsprung (6) auf, der sich von einer Öffnung, durch die das Abschussgerät (3) die Täuschkörper (F) abfeuert, nach außen erstreckt, das Abschussgerät (3) auf der Seite des Gasentladungselements (E) angeordnet ist, das Heißluft ausstößt, der Vorsprung in einem Winkel zur Anordnung der Täuschkörper (F) entlang des Abschussgeräts (3) angeordnet ist und diese so vor Heißluft schützt, wenn die vom Gasentladungselement (E) austretende Luft auf den Vorsprung (6) trifft und vom Abschussgerät (3) nach außen gerichtet wird.

2. Ein rotierendes Täuschkörper-Abwurfsystem (1) nach Anspruch 1, **dadurch gekennzeichnet, dass** das Gehäuse (5) im Wesentlichen formschlüssig mit dem Abschussgerät (3) ist und mit dem Drehmechanismus (4) so verbunden ist, dass es sich zusammen mit dem Abschussgerät (3) bewegt, wobei das Abschussgerät (3) im Inneren des Gehäuses (5) so angeordnet ist, dass die Öffnung des Abschussgeräts (3), durch die der Täuschkörper (F) abgefeuert wird, freiliegt.

3. Ein rotierendes Täuschkörper- Abwurfsystem (1) nach Anspruch 1 oder 2, **dadurch gekennzeichnet, dass** das Gehäuse (5), bestehend aus einer ersten Abdeckung (501), die zwischen dem Rotationsmechanismus (4) und dem Abschussgerät (3) angeordnet ist und deren eines Ende mit dem Rotationsmechanismus (4) und deren anderes Ende mit dem Abschussgerät (3) verbunden ist, sowie einer zweiten Abdeckung (502), die sich von der ersten Abdeckung (501) nach außen erstreckt und das Abschussgerät (3) im Wesentlichen umschließt, wodurch die Montage des Gehäuses (5) erleichtert wird.

4. Ein rotierendes Täuschkörper-Abwurfsystem (1) nach einem der vorstehenden Ansprüche, **gekennzeichnet dadurch, dass** der nach außen gerichtete Vorsprung (6) in Form einer Schürze, die sich ausgehend von der Richtung erstreckt, in der die Täuschkörper (F) entlang des Abschussgeräts (3) im Gehäuse (5) angeordnet sind, und einen gekrümmten Übergang aufweist, um mit den Seiten des Gehäuses (5) eine effektive aerodynamische Struktur zu bilden.

5. Ein rotierendes Täuschkörper- Abwurfsystem (1) nach Anspruch 3, **dadurch gekennzeichnet, dass** es mindestens ein Befestigungselement (7) umfasst, das die abnehmbare Montage der ersten Abdeckung (501) und der zweiten Abdeckung (502) ermöglicht.

6. Ein rotierendes Täuschkörper- Abwurfsystem (1) nach einem der vorstehenden Ansprüche, **gekennzeichnet dadurch, dass** mindestens ein Isolierelement (8), das im Wesentlichen an einer Innenwand des Gehäuses (5) und an einem Teil des Abschussgeräts (3), der im Gehäuse (5) angeordnet ist, angeordnet ist, wobei das Isolierelement (8) aus einem wärmeisolierenden Material besteht, wodurch das Abschussgerät (3) vor der Wärme geschützt wird, die durch die vom Gasentladungselement (E) austretende Heißluft verursacht wird.

7. Ein rotierendes Täuschkörper- Abwurfsystem (1) nach Anspruch 6, **dadurch gekennzeichnet, dass** das Isolierelement (8) im Wesentlichen einen Bereich zwischen dem Abschussgerät (3) und dem Gehäuse (5) bedeckt.

8. Ein rotierendes Täuschkörper- Abwurfsystem (1) nach Anspruch 6, **dadurch gekennzeichnet, dass** das Isolierelement (8) aus Materialien wie Polyurethanschaum, Glaswolle, Kork oder Aerogel besteht.

9. Ein rotierendes Täuschkörper- Abwurfsystem (1) nach einem der vorstehenden Ansprüche, **gekennzeichnet dadurch, dass** das Gehäuse (5) aus einem gegen hohe Temperaturen beständigen Titanwerkstoff besteht.

## Revendications

1. Système rotatif de distribution de leurres infrarouges (1), configuré pour être monté sur une structure (2) d'un véhicule aérien; ledit véhicule aérien comprenant au moins un élément d'évacuation de gaz (E) disposé sur la structure (2), permettant l'évacuation de gaz chauds résiduels; le système rotatif de distribution de leurres infrarouges (1) comprenant une unité lanceuse (3) configurée pour être disposée sur la structure (2) et s'étendre vers l'extérieur de celle-ci et adaptée pour lancer un leurre (F) contre des menaces à guidage infrarouge dirigées vers la structure (2), au moins un leurre (F) lancé depuis l'unité lanceuse (3) contre des menaces à guidage infrarouge dirigées vers la structure (2), de sorte que ledit leurre (F) est utilisé à des fins de défense ; au moins un mécanisme de rotation (4) configuré pour être disposé sur la structure (2) monté de manière rotative, permettant ainsi à l'unité lanceuse (3) à laquelle il est fixé de s'orienter vers une cible de menace à guidage; un boîtier (5) disposé de manière à entourer substantiellement l'unité lanceuse (3), servant de boîtier pour ladite unité lanceuse (3), est relié au mécanisme de rotation (4), transmettant les mouvements du mécanisme de rotation (4) à l'unité lanceuse (3) et protégeant ladite unité lanceuse (3) contre des facteurs externes, ledit boîtier (5) comprenant au moins une saillie (6) s'étendant vers l'extérieur à partir du boîtier (5) depuis une ouverture à travers laquelle l'unité lanceuse (3) lance le leurre (F), **caractérisé en ce que** l'unité lanceuse (3) est configurée pour être disposée sur un côté de l'élément d'évacuation de gaz (E) évacuant de l'air chaud, et ladite saillie étant disposée selon un angle par rapport à la direction selon laquelle les leurres (F) sont positionnés le long de l'unité lanceuse (3), pour protéger l'unité lanceuse (3) de l'air chaud lorsque l'air provenant de l'élément d'évacuation de gaz (E) impacte ladite saillie (6) et est dévié vers l'extérieur de l'unité lanceuse (3).

2. Système rotatif de distribution de leurres infrarouges (1) selon la revendication 1, **caractérisé en ce que** le boîtier (5) est sensiblement conformé à l'unité lanceuse (3) et relié au mécanisme de rotation (4) de manière à se déplacer conjointement avec l'unité lanceuse (3), dans lequel l'unité lanceuse (3) est disposée à l'intérieur du boîtier (5) de sorte que l'ouverture de l'unité lanceuse (3) à travers laquelle elle lance le leurre (F) est exposée.

3. Système rotatif de distribution de leurres infrarouges (1) selon la revendication 1 ou la revendication 2, **caractérisé en ce que** le boîtier (5) comprend un premier couvercle (501) disposé entre le mécanisme de rotation (4) et l'unité lanceuse (3), ayant une extrémité reliée au mécanisme de rotation (4) et une autre extrémité reliée à l'unité lanceuse (3), et un second couvercle (502) s'étendant vers l'extérieur à partir du premier couvercle (501) de manière à entourer substantiellement l'unité lanceuse (3), de manière à faciliter l'assemblage du boîtier (5).

4. Système rotatif de distribution de leurres infrarouges (1) selon l'une quelconque des revendications précédentes, **caractérisé en ce que** la saillie (6) s'étend vers l'extérieur sous la forme d'une jupe de manière à s'élargir à partir de la direction dans laquelle les leurres (F) sont disposés le long de l'unité lanceuse (3) dans le boîtier (5), et présente une transition courbe afin de former, avec les côtés du boîtier (5), une structure aérodynamique efficace.

5. Système rotatif de distribution de leurres infrarouges (1) selon la revendication 3, **caractérisé en ce qu'**il comprend au moins un élément de fixation (7) permettant au premier couvercle (501) et au second couvercle (502) d'être montés de manière amovible l'un à l'autre.

6. Système rotatif de distribution de leurres infrarouges (1) selon l'une quelconque des revendications précédentes, **caractérisé en ce qu'**il comprend au moins un élément isolant (8) disposé sensiblement sur une paroi interne du boîtier (5) et sur une partie de l'unité lanceuse (3) logée dans le boîtier (5), dans lequel l'élément isolant (8) est réalisé en un matériau thermiquement isolant, pour protéger l'unité lanceuse (3) contre la chaleur générée par l'air chaud provenant de l'orifice d'échappement de gaz (E).

7. Système rotatif de distribution de leurres infrarouges (1) selon la revendication 6, **caractérisé en ce que** l'élément isolant (8) recouvre sensiblement une zone comprise entre l'unité lanceuse (3) et le boîtier (5).

8. Système rotatif de distribution de leurres infrarouges (1) selon la revendication 6, **caractérisé en ce que** l'élément isolant (8) est choisi parmi la mousse de polyuréthane, la laine de verre, le liège ou l'aérogel.

9. Système rotatif de distribution de leurres infrarouges (1) selon l'une quelconque des revendications précédentes, **caractérisé en ce que** le boîtier (5) est réalisé en un matériau à base de titane résistant aux hautes températures.
